(19) Europäisches Patentamt
European Patent Office
Office européen des brevets

(11) **EP 1 933 166 A1**

(12) **EUROPEAN PATENT APPLICATION**
published in accordance with Art. 153(4) EPC

(43) Date of publication:
**18.06.2008 Bulletin 2008/25**

(51) Int Cl.:
***G01S 13/93*** (2006.01)

(21) Application number: **06811449.5**

(22) Date of filing: **06.10.2006**

(86) International application number:
**PCT/JP2006/320122**

(87) International publication number:
**WO 2007/043479 (19.04.2007 Gazette 2007/16)**

(84) Designated Contracting States:
**DE FR GB**

(30) Priority: **07.10.2005 JP 2005294816**
**07.10.2005 JP 2005294817**

(71) Applicant: **Matsushita Electric Industrial Co., Ltd.**
**Kadoma-shi**
**Osaka 571-8501 (JP)**

(72) Inventors:
 • **WATANABE, Yutaka**
   **c/o Matsushita Electric Industrial Co.,Ltd.**
   **Chuo-ku**
   **Osaka-shi**
   **Osaka,540-6207 (JP)**

 • **YOSHIDA,Takashi**
   **c/o Matsushita Electric Industrial Co.,Ltd.**
   **Chuo-ku**
   **Osaka-shi**
   **Osaka,540-6207 (JP)**

(74) Representative: **Balsters, Robert et al**
   **Novagraaf International S.A.**
   **25, avenue du Pailly**
   **1220 Les Avanchets - Geneva (CH)**

(54) **RADAR DEVICE**

(57)      Provided is a radar apparatus, which is mounted in a movable body, for detecting an obstacle in the vicinity of the movable body. The radar apparatus comprises a transmitting section (201), a receiving section (202), a velocity acquisition section (204), a reference signal acquisition section (205), and a signal processing section (203). The transmitting section (201) transmits a radar beam into which a transmission signal is modulated by a predetermined frequency. The receiving section (202) receives a reception signal into which the radar beam, which is transmitted from the transmitting section (201) and then is reflected by the obstacle, is demodulated by the predetermined frequency. The velocity acquisition section (204) obtains a velocity of the movable body. The reference signal acquisition section (205) obtains the reception signal as a reference signal in the case where the velocity obtained by the velocity acquisition section (204) is equal to or greater than a predetermined value. The signal processing section (203) detects the obstacle by using the reception signal and the reference signal.

FIG. 2

EP 1 933 166 A1

**Description**

TECHNICAL FIELD

The present invention relates to a radar apparatus to be mounted in a movable body, and more particularly to a radar apparatus, which is mounted in a vehicle and detects an obstacle in the vicinity of the vehicle.

BACKGROUND ART

Development of radar apparatuses which detect an obstacle (hereinafter, referred to as a target) in the vicinity of a vehicle by transmitting and receiving a radar wave and notify a driver of presence of the target has been advanced. As one of the radar apparatuses, a pulse-system radar apparatus (hereinafter, referred to as a pulse radar apparatus) is known. A radar apparatus to be mounted in the vehicle is installed in a position which is not directly visible from the outside, e.g., behind a bumper. Further, depending on a detection range, a plurality of radar apparatuses are installed.

For example, the pulse radar apparatus generates a pulse signal for modulation by using a pulse generator, emits a modulation pulse modulated by a high frequency wave toward outside the vehicle via a transmitting antenna, receives by a receiving antenna a reflected wave which is reflected by the target, toward which the modulation pulse is emitted, and is returned from the target, and amplifies and demodulates a received signal, thereby outputting a baseband reception signal. Thus, by determining the time lag between a baseband transmission signal and the baseband reception signal, a distance to the target is calculated.

The pulse radar apparatus also needs to detect not only the target being present in a place distant from the vehicle but also an object adjacent to the vehicle. For example, the target at such a short distance that a received pulse returns in a shorter time period than pulse duration of a transmitted pulse may not be detected due to influence of a radar beam which travels directly from the transmitting antenna of the pulse radar apparatus to the receiving antenna thereof and due to influence of coupling caused in a circuit between a transmitting section and a receiving section (hereinafter, these are collectively referred to as a 'spillover wave').

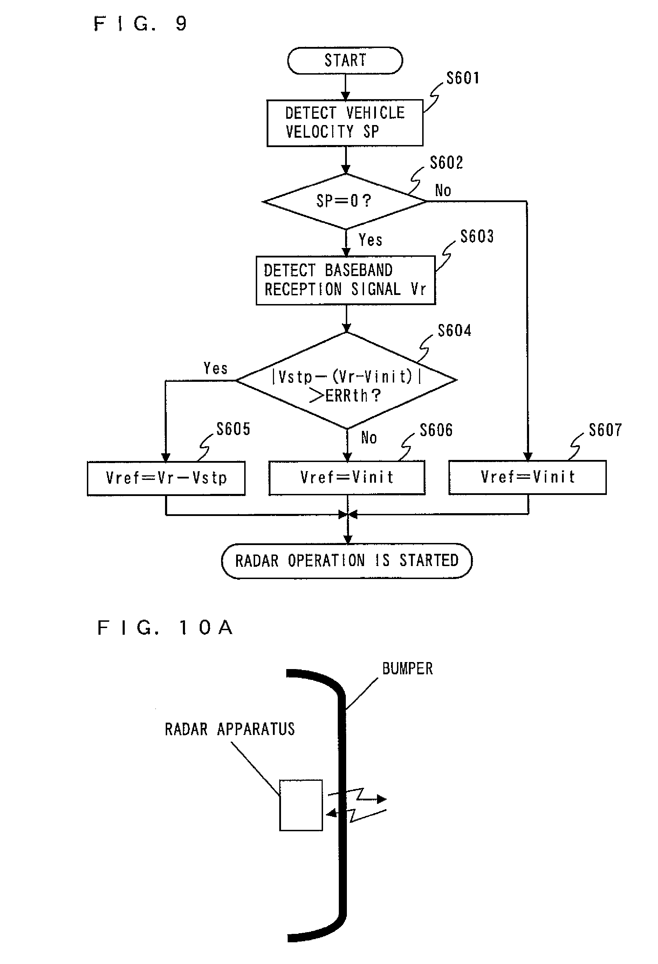

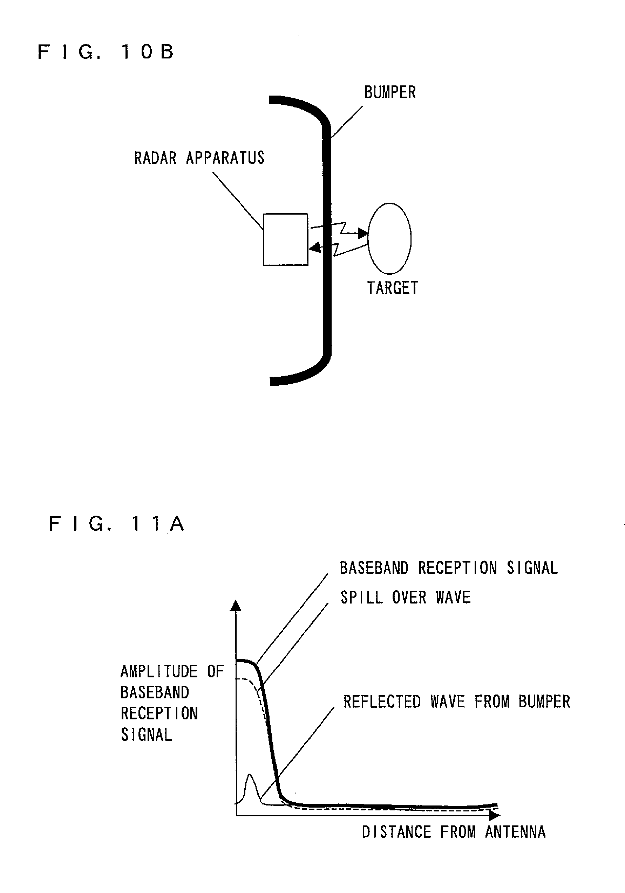

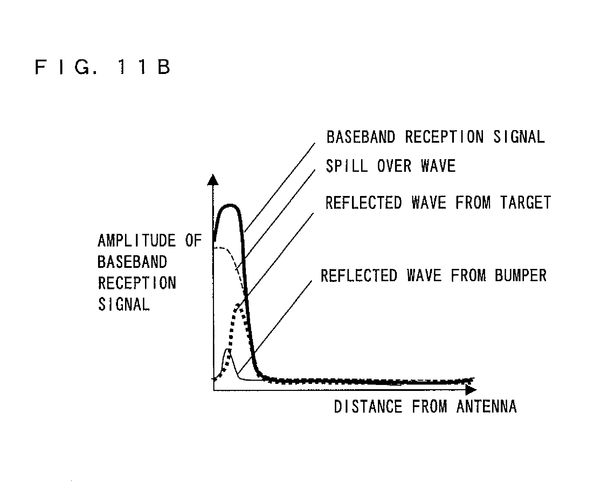

The spillover wave will be described in detail with reference to FIG. 10A, FIG. 10B, FIG. 11A, and FIG. 11B. FIG. 10A is a top view showing installation of a radar apparatus. The radar apparatus is normally installed immediately behind the bumper.

FIG. 10B shows a target additionally placed, as an object to be detected, immediately outside the bumper in the situation of FIG. 10A.

FIG. 11A is a diagram showing the relationship between the distance from an antenna of the pulse radar apparatus and amplitude of the baseband reception signal in the case where the pulse radar apparatus is installed as shown in FIG. 10A. Since the spillover wave is constantly generated regardless of whether there is a target or not, a component obtained by receiving the spillover wave is always contained in the baseband reception signal. Further, as for the reflected wave from the bumper, although an electric wave essentially passes through a plastic bumper, a portion of a transmission signal is reflected by the bumper. Thus, there exists a reflected wave although the amplitude thereof is small. In actuality, the spillover wave and the reflected wave from the bumper are combined and then are observed as the baseband reception signal (shown by a thick full line in the figure).

In the meantime, FIG. 11B shows the baseband reception signal in the situation of FIG. 10B. In addition to FIG. 11A, a reflected wave from the target placed immediately outside the bumper is shown and thus an actual baseband reception signal is indicated by a thick line in the figure. By comparing FIG. 11A with FIG. 11B, it becomes apparent that there is a difference in the amplitude of the baseband reception signal between a case where there is a target and a case where there is no target. Therefore, it is possible to detect a target by obtaining the difference between the amplitude of the baseband reception signal in the case where there is a target and the amplitude of the baseband reception signal in the case where there is no target.

As a method for detecting a target at an extremely short distance without having influence of a signal from the spillover wave, proposed is a pulse radar apparatus utilizing a change of a reception signal, which occurs when a phase difference between a transmitted/received spillover signal and a reflected signal from a mobile target is varied (For example, see patent document 1).

[Patent Document 1] Japanese Laid-Open Patent Publication No. 2003-222669

DISCLOSURE OF THE INVENTION

PROBLEMS TO BE SOLVED BY THE INVENTION

However, in the case where the radar apparatus is actually mounted in the vehicle, how to calculate the baseband reception signal, i.e., a reference signal is a major problem when there is no target in the vicinity of the vehicle as shown in FIG. 11A. This is because such a situation that there is no target in the vicinity of the vehicle is rare, and it is not possible for the radar apparatus to recognize that there is no target in the vicinity of the vehicle unless the radar apparatus retains an accurate reference signal.

As means to solve this, it is conceivable that, for example, in a assembly process of a vehicle in a factory of an automaker, after the pulse radar apparatus is mounted in the vehicle, the vehicle is placed in a location where there is no target in the vicinity of the vehicle, a transmission signal is transmitted there, and the baseband reception signal at the time is retained as the reference signal. However, in this means, the assembly process becomes complex and involves a high cost. In addition, characteristics of apparatuses constituting the radar apparatus are significantly changed due to the temperature or other environments as the vehicle travels. Therefore, the reference signal retained in the assembly process may be considered as a guide but not considered as an accurate reference signal in an actual traveling of the vehicle.

Further, in the method disclosed in patent document 1, in the case where a relative velocity between the radar apparatus and the target is zero, the target is not detected.

Therefore, an object of the present invention is to provide a radar apparatus capable of constantly obtaining an accurate reference signal and highly accurately detecting a target.

SOLUTION TO THE PROBLEMS

In order to attain the above-described object, the present invention adopts the following configuration. More specifically, an aspect of the present invention is a radar apparatus which is mounted in a movable body and detects a target in the vicinity of the movable body. The radar apparatus comprises a transmitting section, a receiving section, a velocity acquisition section, a reference signal acquisition section, and a signal processing section. The transmitting section transmits a radar beam into which a transmission signal is modulated by a predetermined frequency. The receiving section receives a reception signal generated by demodulating, by the predetermined frequency, the radar beam which is transmitted from the transmitting section and is reflected by a target. The velocity acquisition section obtains a velocity of the movable body. The reference signal acquisition section obtains the reception signal as a reference signal in the case where the velocity obtained by the velocity acquisition section is equal to or greater than a predetermined value. The signal processing section detects the target by using the reception signal and the reference signal.

Thus, when the velocity of the movable body is equal to or greater than the predetermined value, it may be determined that there is no target at least in the vicinity of the movable body, where the distance from the target is short. Therefore, by retaining, as the reference signal, the reception signal in the case where the velocity of the movable body is equal to or greater than the predetermined value, it becomes possible to obtain an accurate reference signal.

Further, it is preferable that the radar apparatus further comprises a non-travel signal acquisition section for obtaining a non-travel signal in the case where the velocity obtained by the velocity acquisition section is substantially zero, and when the radar apparatus is terminated and then restarted, the reference signal acquisition section determines whether or not to update the reference signal at the time of restart, by using the reception signal received at the time of restart, the non-travel signal, and the reference signal which has been obtained and stored by the reference signal acquisition section of the radar apparatus.

Further, it is preferable that the non-travel signal acquisition section obtains, as the non-travel signal, the difference between the reception signal received by the receiving section and the reference signal, and the reference signal acquisition section compares, with a predetermined threshold value, an absolute value of the difference between the non-travel signal and a signal calculated by the difference between the reception signal received at the time of restart of the radar apparatus and an initial value of the reference signal, and when the absolute value is greater than the predetermined threshold value, the reference signal acquisition section sets the reference signal at the time of restart to a difference value between the reception signal received at the time of restart and the non-travel signal, and when the absolute value is equal to or smaller than the predetermined threshold value, the reference signal acquisition section sets the reference signal at the time of restart to a default value of the reference signal.

Thus, when it takes a long time from termination of the radar apparatus until restart thereof, an environmental change in temperature or the like occurs during the time period, and therefore it is highly likely that the reference signal retained before the radar apparatus is terminated becomes low in reliability. However, when a change does not occur around the target present in the vicinity of the movable body between a time point of the termination and a time point of the restart, the obtained non-travel signal is a correct value. Therefore, by updating the reference signal using the non-travel signal, a highly accurate radar operation is realized even immediately after the radar apparatus is started.

Further, it is preferable that in the case where the velocity obtained by the velocity acquisition section is equal to or greater than the predetermined value, the reference signal acquisition section obtains, as the reference signal, an average of a plurality of the latest reception signals among a plurality of the reception signals received by the receiving section.

Further, it is preferable that the radar apparatus performs transmission and reception through a shielding member, which is placed so as to be distant from the radar apparatus by a predetermined distance or more.

Further it is preferable that the radar apparatus is set to have an incident angle, which is equal to or smaller than a predetermined value, of the radar beam on the shielding member.

Further it is preferable that the distance from the radar apparatus to the shielding member is determined based on a detection range in which an obstacle in the vicinity of the movable body is detected.

Further it is preferable that the incident angle of the radar beam on the shielding member is determined based on the detection range in which the obstacle in the vicinity of the movable body is detected.

EFFECT OF THE INVENTION

According to the radar apparatus of the present invention, since an accurate reference signal is obtained, it is possible to highly accurately detect a target.

BRIEF DESCRIPTION OF THE DRAWINGS

[FIG. 1] FIG. 1 is a diagram showing an example where a pulse radar apparatus according to the present invention is installed in a vehicle.

[FIG. 2] FIG. 2 is a block diagram showing a configuration of a pulse radar apparatus according to a first embodiment of the present invention.

[FIG. 3] FIG. 3 is a diagram showing installation positions of the pulse radar apparatus and a bumper.

[FIG. 4] FIG. 4 is a diagram showing the relationship between the distance from the pulse radar apparatus to an antenna and the amplitude of a baseband reception signal.

[FIG. 5] FIG. 5 is a diagram showing the amplitude of the baseband reception signal in the case where there is a target and the amplitude of the baseband reception signal in the case where there is no target.

[FIG. 6] FIG. 6 is a flow chart showing a specific operation of a reference signal acquisition section according to the first embodiment of the present invention.

[FIG. 7] FIG. 7 is a block diagram showing a configuration of a pulse radar apparatus according to a second embodiment of the present invention.

[FIG. 8] FIG. 8 is a flow chart showing an operation of a non-travel signal acquisition section according to the second embodiment of the present invention.

[FIG. 9] FIG. 9 is a flow chart showing an operation of setting of a reference signal immediately after restart of the pulse radar apparatus according to the second embodiment of the present invention.

[FIG. 10A] FIG. 10A is a top view of the pulse radar apparatus mounted in the vehicle in the case where there is no target.

[FIG. 10B] FIG. 10B is a top view of the pulse radar apparatus mounted in the vehicle in the case where there is a target.

[FIG. 11A] FIG. 11A is a diagram showing the relationship between the distance from the pulse radar apparatus to the antenna and the amplitude of the baseband reception signal in the case where there is no target.

[FIG. 11B] FIG. 11B is a diagram showing the relationship between the distance from the pulse radar apparatus to the antenna and the amplitude of the baseband reception signal in the case where there is a target.

DESCRIPTION OF THE REFERENCE CHARACTERS

| | |
|---|---|
| 200, 400 | pulse radar apparatus |
| 201 | transmitting section |
| 202 | receiving section |
| 203 | signal processing section |
| 204 | velocity acquisition section |
| 205, 401 | reference signal acquisition section |
| 206 | pulse generator |
| 207 | transmit mixer |
| 208 | transmitting power amplifier |
| 209 | transmitting antenna |
| 210 | splitter |
| 211 | oscillator |

| 212 | receiving antenna |
| 213 | received low noise amplifier |
| 214 | receive mixer |
| 402 | non-travel signal acquisition section |

BEST MODE FOR CARRYING OUT THE INVENTION

(First Embodiment)

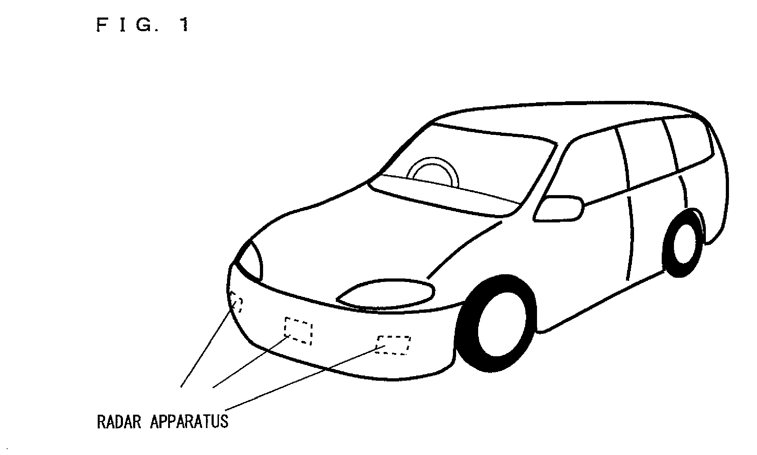

With reference to FIGS. 1 to 6, a pulse radar apparatus according to a first embodiment of the present invention will be described.

FIG. 1 is a diagram showing an example where the pulse radar apparatus is installed in a vehicle. The pulse radar apparatus is installed behind a bumper (corresponding to a shielding member of the present invention) at a front part of the vehicle. As indicated by a dashed line in the figure, in this case, three pulse radar apparatuses are installed. The desired number of radar apparatuses to be installed depends on an area desired to be detected.

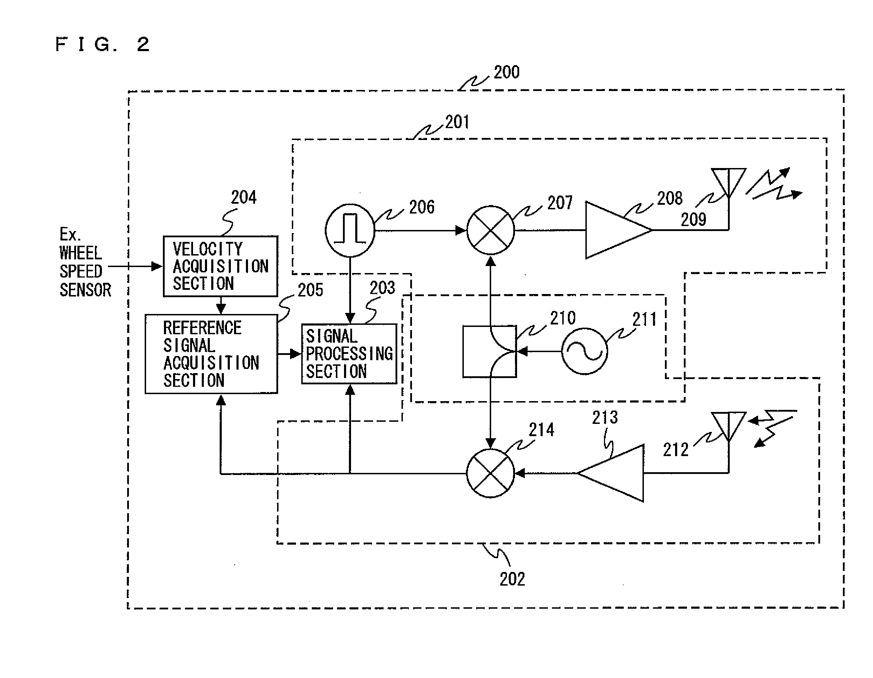

FIG. 2 is a diagram showing a block configuration of the pulse radar apparatus which is mounted in the vehicle as an example of the radar apparatus according to the present embodiment. A pulse radar apparatus 200 comprises a transmitting section 201, a receiving section 202, a signal processing section 203, a velocity acquisition section 204, and a reference signal acquisition section 205.

The transmitting section 201 generates and emits a radar beam toward outside the vehicle. The transmitting section 201 includes a pulse generator 206, a transmit mixer 207, a transmitting power amplifier 208, a transmitting antenna 209, a splitter 210, and an oscillator 211.

First, in the transmitting section 201, a pulse signal for modulation is generated as a baseband transmission signal by the pulse generator 206. In the meantime, a high-frequency continuous wave generated by the oscillator 211 is inputted to the splitter 210 and is divided into a wave for transmission and a wave for reception.

Next, the pulse signal for modulation and the high-frequency continuous wave are inputted to the transmit mixer 207, and a high-frequency pulse signal is generated by multiplication operation. After amplified by the transmitting power amplifier 208, the high-frequency pulse signal is further amplified by the transmitting antenna 209 and is emitted as a radar beam into the air. The transmitting section 201 generates and emits the radar beam by repeating the above-described operation periodically.

The receiving section 202 receives a portion of the radar beam, which is emitted from the transmitting antenna 209, illuminates the target, and is reflected by the target. The receiving section 202 includes the splitter 210, the oscillator 211, a receiving antenna 212, a receive LNA (low noise amplifier) 213, and a receive mixer 214.

When there is any sort of target ahead of the emitted radar beam, the emitted radar beam illuminates the target and the portion of the illuminating radar beam is reflected, thereby returning to the pulse radar apparatus 200 again. After received and amplified by the receiving antenna 212, the reflected radar beam is further amplified by the receive LNA 213.

A signal further amplified by the receive LNA 213 is inputted to the receive mixer 214 along with the high-frequency continuous wave, which is generated by the oscillator 211 and is divided by the splitter 210. The receive mixer 214 outputs a baseband reception signal by the multiplication operation in the same manner as in the transmit mixer 207.

The signal processing section 203 determines whether or not there is a target by calculating the difference in amplitude between the baseband reception signal and a reference signal described below, which is stored in advance in the reference signal acquisition section 205. Further, the signal processing section 203 calculates the distance to the target by calculating a time difference between the baseband transmission signal and the baseband reception signal.

The velocity acquisition section 204 obtains a vehicle velocity. For example, the vehicle velocity may be calculated by using a signal from a wheel speed sensor installed in the vehicle, or may be calculated by detecting an accelerated velocity of the vehicle by using a signal from an accelerated velocity sensor and performing time integration on the detected accelerated velocity of the vehicle.

The reference signal acquisition section 205 obtains the reference signal. Here, the reference signal is the baseband reception signal which is received by the receiving section 202 in the case where there is no target in the vicinity of the vehicle. Specifically, the reference signal acquisition section 205 retains, as the reference signal, the baseband reception signal generated by the receiving section 202 in the case where the vehicle velocity, which is obtained by the velocity acquisition section 204, is equal to or greater than a predetermined value. This is because in the case where the vehicle velocity is equal to or greater than the predetermined value, it is determined that there is no target at least in the vicinity of the movable body, where the distance from the target is short.

In the case of normal driving, since the probability of satisfying the above-described condition is significantly high, it is possible to constantly retain the latest reference signal, and thus it is possible to follow a characteristic change of an apparatus in the radar apparatus due to a change of the temperature and other environments. Therefore, an accurate reference signal is constantly obtainable.

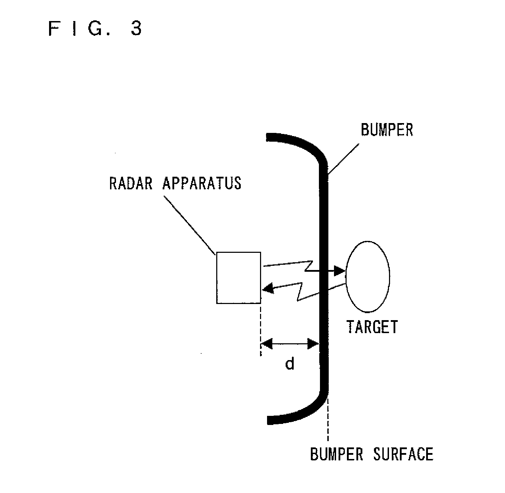

Here, with reference to FIG. 3, a position of installation of the pulse radar apparatus in the vehicle will be described. FIG. 3 is a diagram showing the position of installation of the pulse radar apparatus with respect to the bumper. In FIG. 3, the pulse radar apparatus is installed, not immediately behind the bumper as in a conventional manner, but installed so as to be distant from the bumper by a predetermined distance or more. This predetermined distance is at least a distance, at which the target is detected, even if the distance from the target to the surface of the bumper is extremely short, without having influence of a spillover wave that is generated since the radar beam transmitted by the transmitting section 201 travels directly into the receiving section 202. The following will describe an exemplary setting of the predetermined distance.

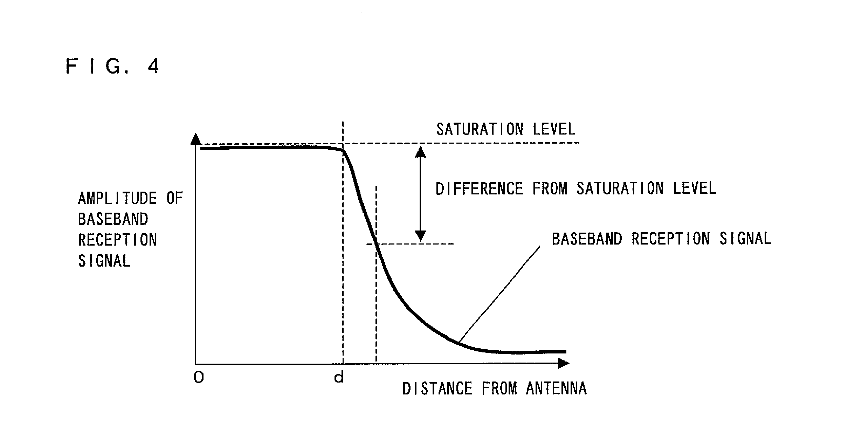

First, the pulse radar apparatus to be used is activated with the bumper placed in front thereof, and a time waveform of the baseband reception signal is observed by an oscilloscope or the like. FIG. 4 is a diagram showing the relationship between the distance from an antenna and the amplitude of the observed baseband reception signal. Although the longitudinal axis and the horizontal axis represent the same as those of FIGS. 10A, 10B, 11A and 11B, a scale of the horizontal axis is enlarged for ease of viewing. Since an output of a transmission wave is large, the amplitude of the baseband reception signal received by the receiving section 202 is saturated and stays at a saturation level. However, as the distance from the pulse radar apparatus becomes longer, the amplitude of the baseband reception signal becomes smaller. By changing the distance from the bumper to the pulse radar apparatus by graduation, obtained is a distance d corresponding to a boundary, at which the amplitude of the baseband reception signal received by the receiving section 202 is not saturated in the case where there is a target in the vicinity of the surface of the bumper. In an actual case of installation in the vehicle, the pulse radar apparatus is installed in a position distant from the bumper by the distance d. In this case, the pulse radar apparatus may be installed in the body of the vehicle, or may be installed in the bumper by molding or fabricating the bumper such that the bumper has an attaching part to maintain the distance d or more.

Although the distance corresponding to the boundary at which the difference between the amplitude of the baseband reception signal received by the receiving section 202 and the saturation level in the case of having a target in the vicinity of the surface of the bumper is zero has been represented by d, it is preferable, in consideration of a resolution performance of a wave detector which is not shown, that such a distance that the difference between the amplitude of the baseband reception signal and the saturation level is equivalent to a minimum resolution performance of the wave detector is represented by d.

When the predetermined distance d is set, the pulse radar apparatus to be used is activated with the bumper placed in front thereof. However, without the bumper placed, the time waveform of the baseband reception signal maybe observed by the oscilloscope or the like, and when the difference between the amplitude of the baseband reception signal and the saturation level is equivalent to the sum of the amplitude of the baseband reception signal of the reflected wave from the bumper and the minimum resolution performance of the wave detector, the distance from the pulse radar apparatus may be set as the predetermined distance d. In other words, when the bumper is placed in front, since the amplitude of the reflected wave from the bumper is added, the target extremely close to the bumper is detectable in the case where the amplitude of the baseband reception signal has not reached the saturation level yet with the amplitude of the reflected wave from the bumper added and the difference between the amplitude of the baseband reception signal and the saturation level is equal to or greater than the minimum resolution performance of the wave detector.

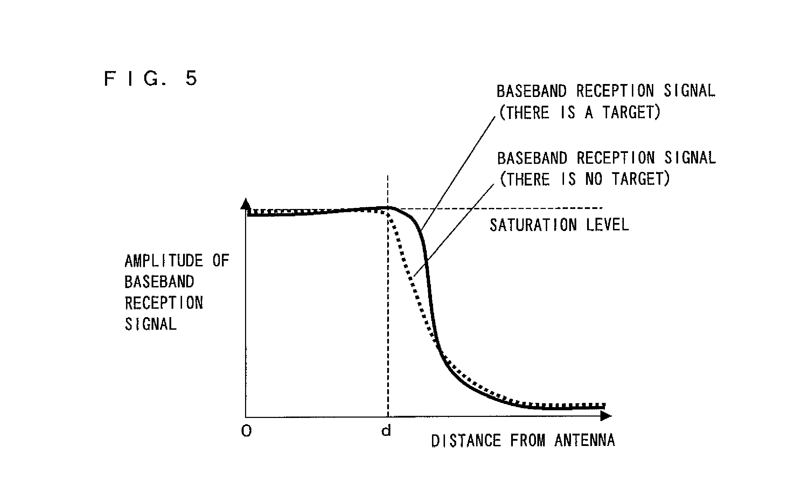

FIG. 5 is a diagram showing the relationship between the distance from the pulse radar apparatus and the amplitude of the baseband reception signal in the case where the pulse radar apparatus is installed as shown in FIG. 3. Since there is a difference in the amplitude of the baseband reception signal between the case where there is a target and the case where there is no target, it becomes possible to detect a target extremely close to the bumper by using the difference.

In the case where a target is detected by the signal processing section 203, the amplitude of the baseband reception signal, which is obtained when it is evident that there is no target, as shown by the dashed line in FIG. 5 is stored as the reference signal in the pulse radar apparatus, and it is determined whether or not there is a target by calculating the difference in the amplitude between the baseband reception signal and the reference signal. Further, the time difference between the baseband transmission signal and the baseband reception signal is calculated, and the distance from the target is calculated thereby.

In general, in the case where the radar beam illuminates a dielectric material such as the bumper, as the incident angle becomes larger (assume that a position at which the radar beam orthogonally illuminates the bumper or the like is at zero degrees), the component of energy of the radar beam which passes through the dielectric material becomes smaller while the component of the energy of the radar beam reflected by the dielectric material becomes larger. In the case where the pulse radar apparatus is installed so as to be distant from the bumper as shown in the present embodiment, the incident angle of the radar beam on the bumper becomes relatively small, in comparison to the case where the pulse radar apparatus is installed extremely close to the bumper. Therefore, the component of the energy of the radar beam which passes through the bumper becomes relatively large, and particularly in the vicinity of the bumper, a broader area can be subject to detection. Thus, it is preferable that the pulse radar apparatus is installed in such a position that the incident angle of the radar beam on the bumper is equal to or smaller than a predetermined value. Based on a detection range in which the target in the vicinity of the vehicle is detected, the distance from the pulse radar apparatus to the bumper may be determined. The incident angle may be adjusted by forming the bumper so as to have a curved surface, or the like.

When the pulse radar apparatus is installed so as to be distant from the bumper by the predetermined distance d, the target present in a place extremely close to the bumper is even reliably detectable, without having a shielding plate and a complex circuit configuration as well as without suppressing a power of a transmission wave. Thus, for example, without controlling the power of the transmission wave, and without decreasing a maximum detection distance, the target in close contact with the bumper of the vehicle can also be detected, thereby contributing to a decrease of an accident.

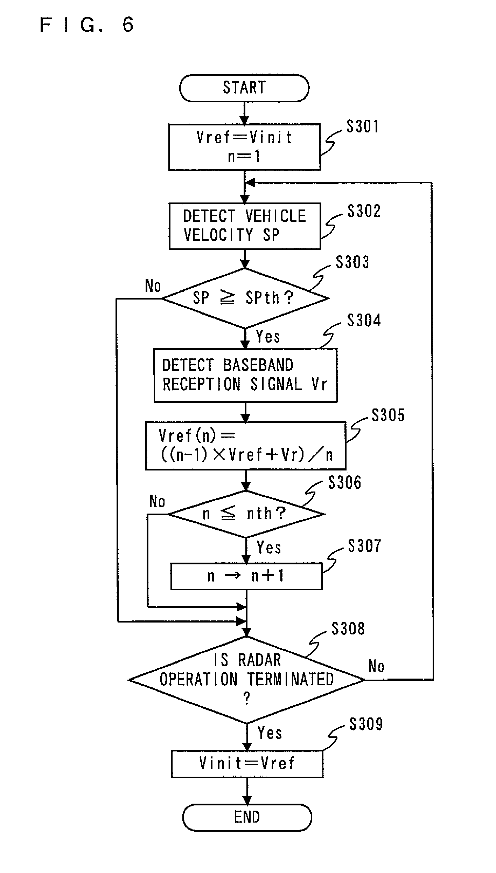

Next, with reference to FIG. 6, a specific method for calculating the reference signal will be described. In FIG. 6, the amplitude of a signal such as an initial amplitude $V_{init}$, a reference signal $V_{ref}$, and an amplitude $V_r$ of the baseband reception signal is not a scalar value, but a vector for the distance from the pulse radar apparatus, i.e., two-dimensional information about the amplitude value of a signal and the distance from the pulse radar apparatus to the target.

In step S301, the signal processing section 205 initializes an amplitude $V_{ref}$ of the reference signal by the initial amplitude $V_{init}$ while setting a count variable n (n is an integral number equal to or greater than one) to one. For example, the initial amplitude $V_{init}$ is a typical value of the amplitude of the baseband reception signal, which is obtained when there is no target, in the case where a radar operation is performed for the first time after the pulse radar apparatus is mounted in the vehicle. When the radar operation is the second time or more, in step S309 described below, the initial amplitude $V_{init}$ is a value of a reference signal $V_{ref}(n)$, which is updated by equation (1) described below.

Next, in step S302, the velocity acquisition section 204 obtains a vehicle velocity SP by using the wheel speed sensor installed in the vehicle. In the following step S303, it is determined whether or not the vehicle velocity SP obtained in step S302 is equal to or greater than a vehicle velocity threshold value $SP_{th}$. As a result of the determination, when the vehicle velocity SP is equal to or greater than a predetermined vehicle velocity threshold value $SP_{th}$ (Yes in step 5303), the processing proceeds to step S304. On the other hand, when the vehicle velocity SP is smaller than the predetermined vehicle velocity threshold value $SP_{th}$ (No in step S303), the processing proceeds to step S308. In the following step S304, the amplitude $V_r$ of the baseband reception signal for the count variable n is detected. In the following step S305, the reference signal $V_{ref}(n)$ for the count variable n is updated in accordance with the following equation (1).

$$V_{ref}(n) = ((n - 1) \times V_{ref} + V_r) / n \cdots (1)$$

The above-described vehicle velocity threshold value $SP_{th}$ is preferably calculated, for example, by the following equation (2).

$$SP_{th} [km/h] = max (4 \times Rmax, 30) \cdots (2)$$

In the above equation (2), Rmax[m] is a maximum detection distance of the pulse radar apparatus, and max (A, B) is a function in which a larger value between arbitrary numeric values A and B is an output. A value indicated by $4 \times$ Rmax is set based on a free running distance (here, free running time is one second) of the vehicle at the vehicle velocity. For example, in the case where the maximum detection distance Rmax is 10m, according to the above equation (2), the vehicle velocity threshold value $SP_{th}$ is 40km/h. In other words, when the vehicle is traveling at 40km/h, it is likely that there is no obstacle ahead at least within the free running distance (in this case approximately 11m). Under such circumstances, since there is no influence of the target, a received reception signal $V_r$ can be used for calculating the reference signal. According to the above equation (2), no matter how short the maximum detection distance Rmax is, the vehicle velocity threshold value $SP_{th}$ is 30 km/h. In the case where the vehicle velocity is small, for example, at the time of traveling in a traffic jam or the like (e.g., equal to or less than 30 km/h), it is likely that there is a target such as a forward vehicle in an area within the maximum detection distance Rmax. Under the circumstances, since there is the influence of the target, when the received reception signal $V_r$ is used for calculating the reference signal, accuracy of the reference signal is deteriorated.

When the count variable n is equal to or less than a predetermined threshold value $n_{th}$ (Yes in step S306) in the following step S306, the processing proceeds to step S307. On the other hand, when the count variable n is greater than the predetermined threshold value $n_{th}$ (No in step S306), the processing proceeds to step S308. In step S307, the count variable n is incremented by one.

When the radar operation is terminated (Yes in step S308) in step S308, the processing proceeds to step S309. On the other hand, when the radar operation is not terminated (No in step S308), the processing returns to step S302 and continues. In step S309, the value of the reference signal $V_{ref}(n)$, which is updated by the above equation (1), is assigned to the initial amplitude $V_{init}$, and the resultant value is considered as an initial value for calculating the reference signal $V_{ref}(n)$ next time the radar operation is performed, and the processing shown in FIG. 6 ends.

The reason why, as in step S305, the reference signal $V_{ref}(n)$ is calculated by using the count variable n is to cause the reference signal $V_{ref}(n)$ to gradually converge on a correct value. Thus, even if the amplitude of the baseband reception signal has an abnormal value by any possibility, it is possible to minimize the influence thereof. Further, by steps S306 and S307, the count variable n is prevented from being equal to or greater than a certain value. This is because that when the count variable n is excessively large, the value of the amplitude $V_r$ of the latest baseband reception signal is scarcely reflected in the value of the reference signal $V_{ref}(n)$ updated in step S305, and thus the characteristic change of the apparatus in the pulse radar apparatus due to the temperature or the like cannot be followed.

As described above, according to the present embodiment, when the vehicle velocity is equal to or greater than the predetermined velocity, it is determined that there is no target at least in the vicinity of the movable body, where the distance from the target is short, and the accurate reference signal is constantly obtained by using as the reference signal the baseband reception signal in that case. Therefore, it becomes possible to highly accurately detect the target in the vicinity of the vehicle.

As in the present embodiment, in the case where the pulse radar apparatus is installed so as to be distant from the bumper by the predetermined distance, the emitted radar beam may travel back and forth between the pulse radar apparatus and the bumper twice or more, and may be received as a so-called multiple reflection signal. In this case, there is a problem in that the pulse radar apparatus erroneously detects the received multiple reflection signal as a target, which in reality does not exist, in the vicinity of the vehicle. However, by using the reference signal obtained by the above-mentioned reference signal acquisition section 205, it becomes possible to more accurately distinguish between the multiple reflection signal from the bumper and the signal from a target in the vicinity of the vehicle. Thus, it becomes possible to reduce an erroneous detection.

In the present embodiment, although the radar apparatus is positioned as shown in FIG. 3, this is merely an example and the placement position of the radar apparatus may be optionally selected.

(Second Embodiment)

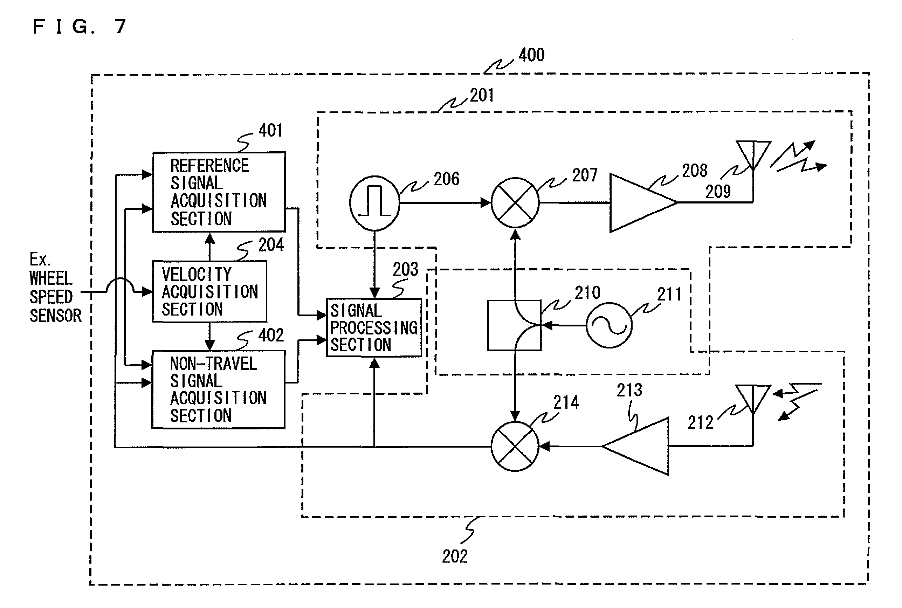

Next, a pulse radar apparatus according to a second embodiment will be described. The radar apparatus according to the second embodiment of the present invention is, as in the case of the first embodiment, a pulse radar apparatus which is mounted in a vehicle. FIG. 7 is a diagram showing a block configuration of the pulse radar apparatus according to the present embodiment.

A pulse radar apparatus 400 according to the present embodiment further comprises a non-travel signal acquisition section 402 in addition to the pulse radar apparatus 200 according to the first embodiment. The transmitting section 201, the receiving section 202, the signal processing section 203, and the velocity acquisition section 204 are identical to those of the pulse radar apparatus 200 according to the first embodiment, and thus detailed descriptions thereof will be omitted.

The non-travel signal acquisition section 402 obtains and retains, as a non-travel signal, the difference between the latest baseband reception signal that is obtained when the vehicle velocity obtained by the velocity acquisition section 204 is substantially zero and the reference signal obtained by the reference signal acquisition section 401. Even after the pulse radar apparatus 400 is terminated along with termination of a vehicle engine, the non-travel signal is stored in an internal memory or the like, which is not shown in the figure.

In the same manner as the reference signal acquisition section 205 according to the first embodiment, the reference signal acquisition section 401 retains, as the reference signal, the baseband reception signal obtained in the case where the vehicle velocity obtained by the velocity acquisition section 204 is equal to or more than the predetermined velocity, and further has a distinguishing feature that the following operation is performed.

In other words, the feature is that in the case where the pulse radar apparatus 400 restarts along with restart of the vehicle engine, the reference signal is corrected by using an absolute value of the difference between a signal, which is calculated by using the amplitude ($V_r$) of the baseband reception signal received by the receiving section 202 and using the initial amplitude ($V_{init}$) (corresponding to an initial value of the reference signal according to the present invention) of the reference signal, which has been stored (updated in step S309 of FIG. 6) at the time of the previous termination of the pulse radar apparatus 400, and the non-travel signal in the non-travel signal acquisition section 402.

For example, when it takes a long time from parking of the vehicle until restarting thereof, an environmental change in temperature or the like occurs, and therefore it is highly likely that the reference signal retained before the parking becomes low in reliability. However, when a change does not occur around the target present in the vicinity of the vehicle between a time point at which an operation of the pulse radar apparatus is terminated along with the parking of the vehicle and a time point at which the operation of the pulse radar apparatus is restarted, the obtained non-travel signal is a correct value. Thus, by correcting the reference signal using the non-travel signal, a highly accurate radar operation is realized even immediately after the radar apparatus is started.

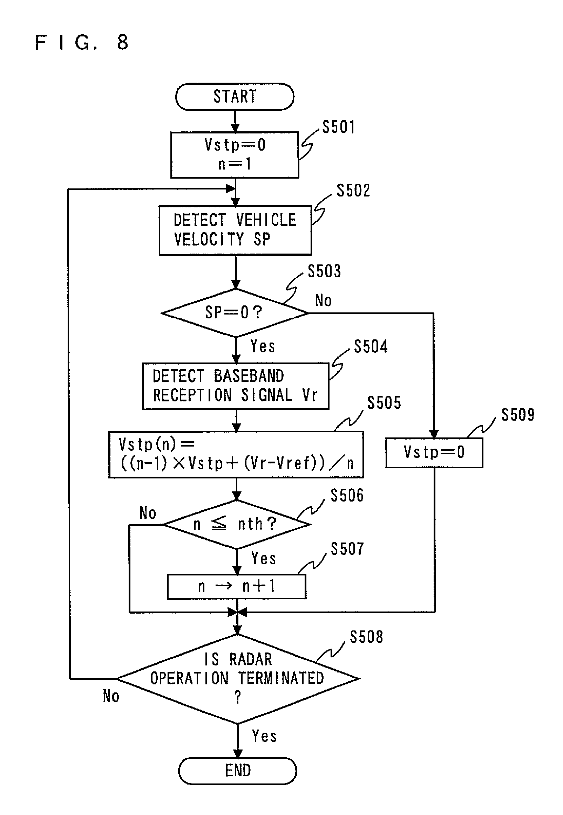

With reference to FIG. 8, a specific operation of the non-travel signal acquisition section 402 will be described. In FIG. 8, the amplitude of a signal such as the amplitude $V_{ref}$ of the reference signal, the amplitude $V_r$ of the baseband reception signal, and an amplitude $V_{stp}$ of the non-travel signal is not a scholar value, but a vector for the distance from the pulse radar apparatus, i.e., two-dimensional information about the amplitude value of a signal and the distance from the pulse radar apparatus to the target.

In step S501, the amplitude $V_{stp}$ of the non-travel signal is initialized and also the count variable n is set to one. Next, in step S502, the velocity acquisition section 204 obtains the vehicle velocity SP by using the wheel speed sensor installed in the vehicle, or the like. In the following step S503, it is determined whether or not the vehicle velocity SP obtained in step S502 is 0 (zero). As a result of the determination, when the vehicle velocity SP is 0 (zero) (Yes in step S503), the processing proceeds to step S504. On the other hand, when the vehicle velocity SP is not 0 (zero) (No in step S503), the processing proceeds to step S509. In step S509, after the amplitude $V_{stp}$ of the non-travel signal is initialized, the processing proceeds to step S508.

In the meantime, in step S504, the amplitude $V_r$ of the baseband reception signal for the count variable n is detected. In the following step S505, an amplitude $V_{stp}(n)$ of the non-travel signal is updated in accordance with the following equation (3).

$$V_{stp}\ (n)\ =\ ((n\ -\ 1)\ \times\ V_{stp}\ +\ (V_r\ -\ V_{ref}))\ /\ n\ \cdots(3)$$

In the following step S506, when the count variable n is equal to or smaller than the predetermined threshold value $n_{th}$ (Yes in step S506), the processing proceeds to step S507. On the other hand, when the count variable n exceeds the predetermined threshold value $n_{th}$ (No in step S506), the processing proceeds to step S508. In step S507, the count variable n is incremented by one.

In step S508, when the radar operation is terminated (Yes in step S508), the processing of FIG. 8 ends. On the other hand, when the radar operation is not terminated (No in step S508), the processing returns to step S502 and continues.

Next, with reference to FIG. 9, a method for setting the reference signal by using the non-travel signal immediately after restarting the pulse radar apparatus 400 will be described. In FIG. 9, the amplitude of a signal such as the initial amplitude $V_{init}$ (corresponding to the amplitude $V_{ref}$ of the reference signal (updated in step S309 of FIG. 6) stored at the time of the previous termination of the pulse radar apparatus 400), the amplitude $V_{ref}$ of the reference signal, the amplitude $V_r$ of the baseband reception signal, and the amplitude $V_{stp}$ of the non-travel signal is not a scholar value, but a vector for the distance from the pulse radar apparatus, i.e., two-dimensional information about the amplitude of a signal and the distance from the pulse radar apparatus to the target.

In step S601, the velocity acquisition section 204 detects the vehicle velocity SP by using the wheel speed sensor mounted in the vehicle, or the like. In step S602, it is determined whether or not the vehicle velocity SP obtained in step S601 is 0 (zero). As a result of the determination, when the vehicle velocity SP is 0 (zero) (Yes in step S602), the processing proceeds to step S603. On the other hand, when the vehicle velocity SP is not 0 (zero) (No in step S602), the processing proceeds to step S607. In step S607, since it is determined that the vehicle has moved immediately after the pulse radar apparatus 400 has been started, correction by using the amplitude $V_{stp}$ of the non-travel signal cannot be performed, and therefore the initial amplitude $V_{init}$, whether reliability of which is high or low is uncertain, is adopted as the reference signal as it is.

In the meantime, in step S603, the amplitude $V_r$ of the baseband reception signal for the count variable n is detected. In the following step S604, by using the following equation (4), the reliability of the initial amplitude $V_{init}$ of the reference signal updated in step S309 of FIG. 6 is determined.

$$|\ V_{stp}\ -\ (V_r\ -\ V_{init})\ |\ >\ ERR_{th}\ \cdots\ (4)$$

In the above equation (4), it is determined whether or not an absolute value of the difference between the amplitude $V_{stp}$ (an updated value in step S505 of FIG. 8) of the non-travel signal, which is stored at the time of the previous termination of the pulse radar apparatus 400, and the signal $(V_r - V_{init})$ calculated by using the amplitude $V_r$ of the baseband reception signal detected in step S603 and using the initial amplitude $V_{init}$ (an updated value in step S309 of FIG. 6) of the reference signal, which is stored at the time of the previous termination of the pulse radar apparatus 400, is greater than a predetermined error threshold value $ERR_{th}$ (step S604). As a result of the determination, when the left side of the above equation (4) ($|V_{stp} - (V_r - V_{init})|$) is greater than the error threshold value $ERR_{th}$ (Yes in step S604), it is determined that the reliability of the initial amplitude $V_{init}$ stored at the time of the previous termination of the pulse radar apparatus 400 is low, and the processing proceeds to step S605. In the following step S605, the reference signal $V_{ref}$ is corrected so as to be $V_{ref} = V_r - V_{stp}$ by using the amplitude $V_{stp}$ of the non-travel signal stored at the time of the previous termination of the pulse radar apparatus 400 and using the amplitude $V_r$ of the baseband reception signal detected in step S603. On the other hand, when the left side of the above equation (4) ($|V_{stp} - (V_r - V_{init})|$) is equal to or smaller than the error threshold value $ERR_{th}$, it is determined that the reliability of the initial amplitude $V_{init}$ stored at the time of the previous termination of the pulse radar apparatus 400 is high, and the processing proceeds to step 606. In the following step S606, the initial amplitude $V_{init}$ stored at the time of the previous termination of the pulse radar apparatus 400 is adopted as the reference signal $V_{ref}$ as it is. After the setting of the reference signal $V_{ref}$ is completed, the aforementioned radar operation is performed.

As described above, by correcting the reference signal using the non-travel signal retained before the previous parking of the vehicle, even in the case where the environmental change in temperature or the like occurs during a time period from parking until restarting, the highly accurate radar operation is realized immediately after the radar apparatus is started.

INDUSTRIAL APPLICABILITY

The radar apparatus according to the present invention is capable of obtaining an accurate reference signal, and thus is capable of highly accurately detecting a target. Therefore, the radar apparatus is not limited to the pulse radar apparatus, which is mounted in the vehicle, as described in the present embodiments, and is applicable to a radar apparatus of a non-pulse system, or the like.

**Claims**

1.  A radar apparatus, which is mounted in a movable body, for detecting an obstacle in the vicinity of the movable body, comprising:

    a transmitting section for transmitting a radar beam into which a transmission signal is modulated by a predetermined frequency;
    a receiving section for receiving a reception signal generated by demodulating, by the predetermined frequency, the radar beam which is transmitted from the transmitting section and is reflected by the obstacle;
    a velocity acquisition section for obtaining a velocity of the movable body;
    a reference signal acquisition section for obtaining the reception signal as a reference signal in a case where the velocity obtained by the velocity acquisition section is equal to or greater than a predetermined value; and
    a signal processing section for detecting the obstacle by using the reception signal and the reference signal.

2.  The radar apparatus according to claim 1, further comprising a non-travel signal acquisition section for obtaining a non-travel signal in a case where the velocity obtained by the velocity acquisition section is substantially zero, wherein the reference signal acquisition section determines, in a case where the radar apparatus is terminated and then is restarted, whether or not to update the reference signal at a time of restart, by using the reception signal received at the time of restart, the non-travel signal, and the reference signal which has been obtained and stored by the reference signal acquisition section of the radar apparatus.

3.  The radar apparatus according to claim 2, wherein the non-travel signal acquisition section obtains, as the non-travel signal, a difference between the reception signal received by the receiving section and the reference signal, and the reference signal acquisition section compares, with a predetermined threshold value, an absolute value of a difference between the non-travel signal and a signal calculated by a difference between the reception signal received at the time of restart of the radar apparatus and an initial value of the reference signal, and when the absolute value is greater than the predetermined threshold value, the reference signal acquisition section sets the reference signal at the time of restart to a difference value between the reception signal received at the time of restart and the non-travel signal, and when the absolute value is equal to or smaller than the predetermined threshold value, the reference signal acquisition section sets the reference signal at the time of restart to a default value of the reference signal.

4.  The radar apparatus according to claim 1, wherein in the case where the velocity obtained by the velocity acquisition section is equal to or greater than the predetermined value, the reference signal acquisition section obtains, as the reference signal, an average of a plurality of the latest reception signals among a plurality of the reception signals received by the receiving section.

5. The radar apparatus according to claim 1, wherein the radar apparatus performs transmission and reception through a shielding member, which is placed so as to be distant from the radar apparatus by a predetermined distance or more.

6. The radar apparatus according to claim 5, wherein the radar apparatus is set to have an incident angle, which is equal to or smaller than a predetermined value, of the radar beam on the shielding member.

7. The radar apparatus according to claim 5, wherein a distance from the radar apparatus to the shielding member is determined based on a detection range in which the obstacle in the vicinity of the movable body is detected.

8. The radar apparatus according to claim 6, wherein the incident angle of the radar beam on the shielding member is determined based on a detection range in which the obstacle in the vicinity of the movable body is detected.

FIG. 1

RADAR APPARATUS

FIG. 2

EP 1 933 166 A1

F I G. 3

BUMPER

RADAR APPARATUS

TARGET

d

BUMPER SURFACE

F I G. 4

EP 1 933 166 A1

SATURATION LEVEL

AMPLITUDE OF
BASEBAND
RECEPTION
SIGNAL

DIFFERENCE FROM SATURATION LEVEL

BASEBAND RECEPTION SIGNAL

O                    d

DISTANCE FROM ANTENNA

EP 1 933 166 A1

F I G. 5

BASEBAND RECEPTION SIGNAL
(THERE IS A TARGET)

BASEBAND RECEPTION SIGNAL
(THERE IS NO TARGET)

SATURATION LEVEL

AMPLITUDE OF
BASEBAND
RECEPTION
SIGNAL

O          d

DISTANCE FROM ANTENNA

FIG. 6

```
                    ┌──────────────┐
                    │    START     │
                    └──────┬───────┘
                           │
                    ┌──────▼───────┐  ⌐ S301
                    │  Vref=Vinit  │
                    │     n=1      │
                    └──────┬───────┘
                           │
                    ┌──────▼───────┐  ⌐ S302
                    │ DETECT VEHICLE│
                    │  VELOCITY SP  │
                    └──────┬───────┘
                           │
                    ⌐ S303 │
              No    ◇──────▼──────◇
          ◄────────  SP ≧ SPth?
                     ◇──────┬──────◇
                            │ Yes    ⌐ S304
                    ┌───────▼──────────┐
                    │ DETECT BASEBAND  │
                    │ RECEPTION SIGNAL Vr│
                    └───────┬──────────┘
                            │        ⌐ S305
                    ┌───────▼──────────┐
                    │  Vref(n)=        │
                    │((n-1)×Vref+Vr)/n │
                    └───────┬──────────┘
                            │  ⌐ S306
              No    ◇───────▼──────◇
          ◄────────   n ≦ nth?
                     ◇───────┬──────◇
                             │ Yes    ⌐ S307
                     ┌───────▼──────┐
                     │  n → n+1     │
                     └───────┬──────┘
                             │
                    ⌐ S308   │
              ◇──────────────▼─────────────◇     No
              IS RADAR OPERATION TERMINATED ────────►
              ◇──────────────┬─────────────◇
                             │ Yes    ⌐ S309
                     ┌───────▼──────┐
                     │  Vinit=Vref  │
                     └───────┬──────┘
                             │
                     ┌───────▼──────┐
                     │     END      │
                     └──────────────┘
```

$$Vref(n) = ((n-1) \times Vref + Vr) / n$$

FIG. 7

EP 1 933 166 A1

F I G. 8

```
                    START

                  ┌──────────┐      S501
                  │ Vstp=0   │
                  │ n=1      │
                  └──────────┘
                                     S502
              ┌──────────────────┐
              │ DETECT VEHICLE   │
              │ VELOCITY SP      │
              └──────────────────┘
                                     S503
                                          No
                 ◇ SP=0 ? ◇ ──────────────────┐
                     │                         │
                     │ Yes            S504     │
              ┌──────────────────┐             │
              │ DETECT BASEBAND  │             │
              │ RECEPTION SIGNAL Vr│           │
              └──────────────────┘             │
                                  S505         │
        ┌──────────────────────────────┐   ┌────────────┐  S509
        │ Vstp(n)=                      │   │  Vstp=0    │
        │ ((n-1)×Vstp+(Vr-Vref))/n      │   └────────────┘
        └──────────────────────────────┘
                     │              S506
          No         │
        ┌──────── ◇ n ≦ nth ? ◇
        │            │
        │            │ Yes         S507
        │      ┌──────────────┐
        │      │  n → n+1     │
        │      └──────────────┘
        │            │
        └────────────┤◄─────────────────────────┘
                     │              S508
      No             │
   ┌──────── ◇ IS RADAR              ◇
   │           OPERATION TERMINATED
   │                 ?
   │                 │
   │                 │ Yes
   │              ┌──────┐
   │              │ END  │
   │              └──────┘
   └───────(back to S502)
```

FIG. 9

```
                    ┌─────────────┐
                    │    START    │
                    └──────┬──────┘
                           │           S601
                    ┌──────▼──────┐
                    │DETECT VEHICLE│
                    │ VELOCITY SP │
                    └──────┬──────┘
                           │              S602
                        ◇──▼──◇            No
                       ◇ SP=0? ◇──────────────────────┐
                        ◇─────◇                        │
                           │ Yes         S603          │
                    ┌──────▼──────┐                    │
                    │DETECT BASEBAND│                  │
                    │RECEPTION SIGNAL Vr│              │
                    └──────┬──────┘                    │
                           │           S604            │
              Yes       ◇──▼──◇                        │
        ┌────────────◇|Vstp-(Vr-Vinit)|◇              │
        │             ◇  >ERRth?  ◇                    │
        │              ◇─────◇                         │
        │  S605           │ No    S606                 │  S607
   ┌────▼─────┐     ┌─────▼─────┐              ┌───────▼──────┐
   │Vref=Vr-Vstp│    │ Vref=Vinit │              │  Vref=Vinit  │
   └────┬─────┘     └─────┬─────┘              └───────┬──────┘
        │                 │                            │
        └─────────────────┼────────────────────────────┘
                          │
                   ┌──────▼──────────────────┐
                   │RADAR OPERATION IS STARTED│
                   └─────────────────────────┘
```

FIG. 10A

RADAR APPARATUS

BUMPER

FIG. 10B

FIG. 11A

FIG. 11B

BASEBAND RECEPTION SIGNAL

SPILL OVER WAVE

REFLECTED WAVE FROM TARGET

REFLECTED WAVE FROM BUMPER

AMPLITUDE OF BASEBAND RECEPTION SIGNAL

DISTANCE FROM ANTENNA

## INTERNATIONAL SEARCH REPORT

| International application No. |
|---|
| PCT/JP2006/320122 |

**A. CLASSIFICATION OF SUBJECT MATTER**
*G01S13/93*(2006.01)i

According to International Patent Classification (IPC) or to both national classification and IPC

**B. FIELDS SEARCHED**

Minimum documentation searched (classification system followed by classification symbols)
G01S1/00-17/95

Documentation searched other than minimum documentation to the extent that such documents are included in the fields searched
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| P,A | JP 2006-017625 A  (Mitsubishi Electric Corp.), 19 January, 2006 (19.01.06), Par. Nos. [0052] to [0053] (Family: none) | 1-8 |
| P,A | JP 2006-098359 A  (Denso Corp.), 13 April, 2006 (13.04.06), Par. Nos. [0026], [0030] & US 2006/077049 A | 1-8 |
| A | JP 2003-222669 A  (Mitsubishi Electric Corp.), 08 August, 2005 (08.08.05), Par. Nos. [0025] to [0028], [0044] to [0045] (Family: none) | 1-8 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 31 October, 2006 (31.10.06) | 07 November, 2006 (07.11.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

EP 1 933 166 A1

**INTERNATIONAL SEARCH REPORT**

International application No.

PCT/JP2006/320122

C (Continuation). DOCUMENTS CONSIDERED TO BE RELEVANT

| Category* | Citation of document, with indication, where appropriate, of the relevant passages | Relevant to claim No. |
|---|---|---|
| A | JP 08-146131 A (Honda Motor Co., Ltd.), 07 June, 1996 (07.06.96), Par. Nos. [0048] to [0049] & US 5717399 A1 | 1-8 |
| A | Ian Gresham, "Ultra-Wideband Radar Sensors for Short-Range Vehicular Applications", IEEE TRANSACTIONS ON MICROWAVE THEORY AND TECHNIQUES, VOL.52, NO.9, 2004, pages 2105-2122 (see pages 2107-2108 left column) | 1-8 |
| A | Toshiyuki HIROSE, "24GHzUWB Tankyori Shasai Radar", Function & materials, Vol.24, No.8, 2004, pages 38 to 44 (pages 38 to 40, left column) | 1-8 |

Form PCT/ISA/210 (continuation of second sheet) (April 2005)

24

| **INTERNATIONAL SEARCH REPORT** | International application No. |
| --- | --- |
| | PCT/JP2006/320122 |

On claims 1 - 8, only the disclosure satisfying the following two conditions is made within the meaning of PCT Article 5 and is supported within the meaning of PCT Article 6:
(1) Whether the "radar" or the "reference signal" is for the short range; and
(2) That the "reference signal" is one having no obstacle.

Unlike the above, neither the technique for acquiring a reference signal for a long range in case the speed is at a predetermined value or higher nor the technique for acquiring a reference signal to identify/trace an existing obstacle is disclosed in or supported by the specification.

This international search has been made on the disclosures, which satisfy the aforementioned conditions (1) and (2) and which are disclosed within the meaning of PCT Article 5 and supported within the meaning of PCT Article 6.

Form PCT/ISA/210 (extra sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003222669 A